# EUROPÄISCHE PATENTANMELDUNG

(11) **EP 4 822 573 A1**
(43) Veröffentlichungstag der Anmeldung: **14.10.2026**
(21) Anmeldenummer: 25169118.4
(22) Anmeldetag: 08.04.2025
(51) Int. Cl.: G06F 21/62, G06F 21/41, G06F 21/60, H04L 9/40

(54) **COMPUTER-IMPLEMENTIERTES VERFAHREN ZUM VERWALTEN EINER AUTORISIERUNG VON MINDESTENS EINEM TENANT ÜBER EINE MEHRZAHL VON ANWENDUNGEN HINWEG**

(71) Anmelder: Siemens Aktiengesellschaft, 80333 München (DE)
(72) Erfinder: BARTHOLDT, Jörg, 81737 München (DE); FORSTMEIER, Wolfgang, 91054 Buckenhof (DE); JANSCH DOS SANTOS ROCHA, Marcos, 80797 München (DE)
(74) Vertreter: Siemens Patent Attorneys

(57) **Zusammenfassung**

Die Erfindung betrifft ein computer-implementiertes Verfahren zum Verwalten einer Autorisierung von einer Mehrzahl von Tenantn über eine Mehrzahl von Anwendungen (10, 20) hinweg, aufweisend die Schritte: a. Bereitstellen von einer Mehrzahl von Zuordnungen (30) zwischen einer Mehrzahl von Tenant-Strukturen in Bezug auf die Mehrzahl der Anwendungen (10, 20) (S1); b. Erstellen eines Zugriffs des mindestens einen Tenants auf eine erste Anwendung (10) aus der Mehrzahl der Anwendungen (S2); wobei die erste Anwendung (10) mit einer ersten zugehörigen Tenant-Struktur (12) der Mehrzahl der Tenant-Strukturen verknüpft ist; und c. Erstellen eines Zugriffs des mindestens einen Tenants auf mindestens eine zweite Anwendung (20) mit einer zweiten zugehörige Tenant-Struktur (22) der Mehrzahl der Tenant-Strukturen (12, 22) basierend auf der Mehrzahl der Zuordnungen (30) (S3).

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Verwalten einer Autorisierung von mindestens einem Tenant über eine Mehrzahl von Anwendungen hinweg. Ferner ist die Erfindung auf eine entsprechende Datenverarbeitungsvorrichtung und ein Computerprogrammprodukt gerichtet.

### 2. Stand der Technik

Das einmalige Anmelden (engl. "Single Sign-On", kurz SSO) für die Authentisierung über Applikationsgrenzen hinweg ist aus dem Stand der Technik bekannt. Für das einmalige Anmelden kommen häufig Smartcards zum Einsatz.

Im Gegensatz dazu sind bis heute keine Möglichkeiten für die Autorisierung bzw. Verwaltung von Tenant-Zugriffen über Applikationsgrenzen hinweg bekannt. Die Autorisierung, wie die Verwaltung der Tenant-Zugriffe, der Berechtigungen der Tenants und der Rollen der Tenants sind applikationsspezifisch. Daher bleiben sie üblicherweise auf einzelne Anwendungen beschränkt.

Unterschiedliche Anwendungen strukturieren ihre Tenants auch meist unterschiedlich. Die Komplexität wird durch diese unterschiedlichen Tenant-Strukturen in den verschiedenen Anwendungen somit erhöht. Selbst wenn beispielsweise mehrere Anwendungen in die Gebäudedomäne gehören, strukturiert eine Anwendung grobgranularer nach Städten (bsp. München, Erlangen), eine andere Anwendung hingegen nach Standort (bsp. München Perlach, Wittelsbacher Platz) oder gar nach Gebäuden (bsp. Gebäude 53, Gebäude 33).

Die Tenants, die bereits in der einen Anwendung registriert sind und bestimmte Berechtigungen haben, müssen in der anderen Anwendung erneut eingerichtet werden. Die Überlappung in der Zuordnung, beispielsweise beim Tenant mit der Rolle Energie-Manager auf Gebäude 53 Zugriff zu haben und beim Tenant mit der Rolle Tarif-Manager auf die Strompreise am Standort München Perlach Zugriff zu haben, wird bisher nicht hinreichend ausgenutzt.

Folglich ist es gemäß dem Stand der Technik bis heute erforderlich jeden Tenant in jeder Anwendung separat zu registrieren und die Berechtigungen individuell zu konfigurieren. Der Nachteil liegt darin, dass die einzelnen Registrierungen und Konfigurationen zu einem erhöhtem Verwaltungsaufwand und potenziellen Inkonsistenzen zwischen den technischen Systemen führen, auf welchen die Anwendungen durchgeführt werden. Ein weiterer Nachteil ist darin zu sehen, dass die Umsetzung übergreifender Sicherheitsrichtlinien und die Einhaltung von Compliance-Vorgaben erschwert werden.

Weiterhin variieren oft die Rollen- und Berechtigungskonzepte zwischen den Anwendungen. Was in einem technischen System als "Administrator" bezeichnet wird, kann in einem anderen technischen System eine völlig andere Bedeutung haben. Dies erschwert die Zuordnung äquivalenter Berechtigungen über Anwendungsgrenzen hinweg.

Daher besteht ein Bedarf an Lösungen für die Verwaltung einer Autorisierung, die eine effiziente und konsistente Verwaltung von Tenant-Zugriffen über föderierte Anwendungslandschaften hinweg ermöglichen. Dabei sollten unterschiedliche Tenant-Strukturen und Rollenkonzepte berücksichtigt sowie eine flexible Abbildung von Berechtigungen zwischen technischen Systemen unterstützt werden.

Die vorliegende Erfindung stellt sich daher die Aufgabe ein computer-implementiertes Verfahren zum Verwalten einer Autorisierung von mindestens einem Tenant über eine Mehrzahl von Anwendungen hinweg bereitzustellen, welches effizienter und zuverlässiger ist.

### 3. Zusammenfassung der Erfindung

Die oben genannte Aufgabe wird erfindungsgemäß durch ein computer-implementiertes Verfahren zum Verwalten einer Autorisierung von mindestens einem Tenant über eine Mehrzahl von Anwendungen hinweg gelöst, aufweisend die Schritte:
a. Bereitstellen von einer Mehrzahl von Zuordnungen zwischen einer Mehrzahl von Tenant-Strukturen in Bezug auf die Mehrzahl der Anwendungen;
b. Erstellen eines Zugriffs des mindestens einen Tenants auf eine erste Anwendung aus der Mehrzahl der Anwendungen; wobei
   die erste Anwendung mit einer ersten zugehörigen Tenant-Struktur der Mehrzahl der Tenant-Strukturen verknüpft ist; und
c. Erstellen eines Zugriffs des mindestens einen Tenants auf mindestens eine zweite Anwendung mit einer zweiten zugehörige Tenant-Struktur der Mehrzahl der Tenant-Strukturen basierend auf der Mehrzahl der Zuordnungen.

Dementsprechend ist die Erfindung auf ein computer-implementiertes Verfahren zum Verwalten der Autorisierung des mindestens einen Tenants über die Mehrzahl der Anwendungen hinweg gerichtet. Ein Tenant kann eine Firma oder ein Unternehmen sein. Regionalgesellschaften können auch als eigenständige Tenants geführt werden. Benutzer können Menschen oder Personen sein, welche eine oder mehrere Anwendungen verwenden oder mieten. Die Benutzer können zu mindestens einem Tenant gehören. Die Tenant-Struktur hat sich als vorteilhaft erwiesen, da sie die Sichtbarkeit und/oder Verantwortung zusammenfasst. Dadurch kann auch vorteilhaferweise zum Beispiel ein Administrator für alle deutschen Gebäude einer Firma, ein anderer Administrator aller brasilianischen Gebäude der Firma eingesetzt werden. Beispielsweise kauft ein Kunde mehrere Anwendungen, wie zwei Anwendungen. Der Begriff "Anwendung" kann auch als Applikation ausgelegt werden. Die Anwendungen haben zwei entsprechende unterschiedliche Tenant Namen mit beispielsweise Tenant A und Tenant B. Beispielhafte Anwendungen sind Energie-Manager und Tarif-Manager. Die Verwaltung der Autorisierung der Tenants erfolgt über die Applikationsgrenzen hinweg.

Im ersten Verfahrensschritt werden die Eingabedaten bereitgestellt. Die Eingabedaten weisen die Mehrzahl der Zuordnungen auf. Der Begriff Zuordnung kann auch als "Mapping" bezeichnet werden. Die Zuordnungen erfolgen zwischen den Tenant-Strukturen und beziehen sich dabei auf die Anwendungen. Dementsprechend wird einer Tenant-Struktur einer Anwendung und eine andere Tenant-Struktur einer anderen Anwendung zugeordnet oder zugewiesen.

Die Eingabedaten können über eine oder mehrere Eingabeschnittstellen empfangen werden. Zusätzlich oder alternativ können die Ausgabedaten auch über eine oder mehrere Ausgabeschnittstellen gesendet werden. Die Schnittstellen stellen vorteilhafterweise eine effiziente und reibungslose Datenübertragung zwischen den Recheneinheiten sicher. Die Daten können bidirektional ausgetauscht werden ohne Datenstau.

Weiterhin wird für den mindestens einen Tenant ein Zugriff auf die erste Anwendung aus der Mehrzahl der Anwendungen erstellt. Folglich kann der Tenant nach der Erstellung auf die erste Anwendung zugreifen. Die erste Anwendung ist dabei mit der ersten zugehörigen Tenant-Struktur der Mehrzahl der Tenant-Strukturen verknüpft. Beispielsweise erhält er mindestens ein Zugriffsrecht oder mindestens eine Berechtigung auf mindestens einen Teil der ersten Anwendung und kann auf diesen Teil zugreifen. Folglich ist der Tenant in der ersten Anwendung autorisiert. Dementsprechend sind die Anwendungen jeweils mit einer zugehörigen Tenant-Struktur verknüpft oder assoziiert. Unterschiedliche Anwendungen können ihre Tenants auch unterschiedlich strukturieren. Dementsprechend können sich die Tenant-Strukturen zwischen den Anwendungen auch unterscheiden.

Mit anderen Worten handelt es sich beim ersten Zugriff um eine explizite Entscheidung für eine Rollenzuordnung beim Onboarding eines neuen Benutzers, typischerweise durch einen Administrator oder gegebenenfalls regelbasiert über eine Gruppenzugehörigkeit, wie eine Abteilung oder eine Verantwortung im Unternehmen.

Weiterhin wird der Zugriff des mindestens einen Tenants auf die mindestens eine zweite Anwendung basierend auf der Mehrzahl der Zuordnungen erstellt. Die zweite Anwendung ist dabei mit der zweiten zugehörigen Tenant-Struktur der Mehrzahl der Tenant-Strukturen verknüpft. Nach der erfolgten Erstellung kann der Tenant auch auf die zweite Anwendung zugreifen. Er hat folglich Zugriff auf die erste sowie mindestens eine zweite Anwendung. Es ist nicht erforderlich, dass sich der Tenant in der mindestens einen zweiten Anwendung separat registriert bzw. anmeldet und auf komplexe sowie zeitaufwendige Art und Weise eingerichtet werden muss. Die zweite Anwendung kann auch als weitere oder andere Anwendung verstanden werden, in welcher der Tenant ebenfalls autorisiert wird.

Der zweite Zugriff erfolgt mit anderen Worten automatisch, weil die Zuordnungen die Tenant-Struktur in der ersten Anwendung mit der Tenant-Struktur in der zweiten Anwendung verbunden haben. Der Benutzer muss daher nicht mehr explizit zugeordnet werden.

Das erfindungsgemäße Verfahren ermöglicht die Autorisierung des Tenants in der ersten Anwendung sowie in jeder weiteren Anwendung, auf welche ein Zugriff erwünscht ist, auf effiziente und zuverlässige Art und Weise. Mit anderen Worten führt das erfindungsgemäße Verfahren einen zentralisierten Mapping-Mechanismus ein, der die automatische Übersetzung der Tenant-Strukturen, wie Tenantrollen und/oder -berechtigungen von einer Anwendung zur anderen ermöglicht.

Folglich erlangt der Tenant die Zugriffsrechte auf die erste Anwendung sowie auf die mindestens eine zweite Anwendung durch das computer-implementierte Verfahren. Der Tenant wird über die Anwendungen hinweg autorisiert und erhält Zugriff bzw. die Zugriffsrechte auf diese.

Die Tenants, die bereits in der einen Anwendung registriert sind und bestimmte Berechtigungen haben, müssen in der anderen Anwendung im Gegensatz zum Stand der Technik nicht erneut eingerichtet werden, wie Rollen zugeordnet bekommen, auf die sie Zugriff erhalten sollen.

Die Definition der Tenant-Strukturen, wie Rollen oder Rechte, erfolgt bevorzugt zur Konfigurationszeit. Das Mapping erfolgt bevorzugt zwischen den Rollen oder Rechten auch zur Konfigurationszeit. Die Autorisierung hingegen erfolgt bevorzugt zur Laufzeit, das heißt es muss nichts mehr konfiguriert werden. Sobald ein Benutzer einen Zugriff zugewiesen bekommen hat, hat er implizit eine Autorisierung in den über das Mapping verbundenen Anwendungen.

Die vorliegende Erfindung stellt dadurch sicher, dass ein Tenant nur einmal eingerichtet wird und sich mit seiner Identität bei vielen Anwendungen anmelden kann. Der Tenant kann durch die Registrierung in einer Anwendung die entsprechenden Rechte in einer oder mehreren anderen Anwendungen automatisch erhalten. Folglich erhält der Tenant mit der Anmeldung in den anderen Anwendungen dort auch eine Berechtigung bzw. Autorisierung.

Das erfindungsgemäße Verfahren führt zu einem erheblich reduzierten Verwaltungsaufwand, da die Verwaltung der Autorisierung und somit des Tenant-Zugriffs rationalisiert wird. Es hält dabei vorteilhafterweise eine konsistente Autorisierung über mehrere Anwendungen innerhalb einer föderierten Architektur aufrecht.

Durch die Nutzung von Beziehungen zwischen Tenants und Rollen oder Berechtigungen über verschiedene Anwendungen hinweg ermöglicht das erfindungsgemäße Verfahren eine effizientere und skalierbarere Verwaltung der Tenant-Zugriffe in komplexen Mehrfachanwendungsumgebungen. Das erfindungsgemäße Verfahren kann besonders vorteilhaft in Szenarien sein, in denen Tenants den Zugriff auf mehrere Anwendungen mit unterschiedlichen Organisationsstrukturen und Berechtigungsmodellen benötigen.

Sofern nicht anders angegeben, können alle Schritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Das technische System kann beispielsweise eine Maschine oder Anlage oder mehrere physisch, virtuell und/oder funktional verbundene Maschinen und/oder Anlagen beinhalten. Beispielhafte, aber nicht beschränkende Anwendungsgebiete sind Systeme im Bereich der Energietechnik, etwa Anlagen und/oder Maschinen zur Energieerzeugung, zur Energieumwandlung und/oder zum Energietransport. Weitere nicht beschränkende Anwendungsgebiete liegen im Bereich der Mobilität, etwa im Eisenbahnverkehr, sodass das System beispielsweise Zugkomponenten, Zugmaschinen, Gleisanlagen oder Teile davon, Personenkraftwagen, Lastkraftwagen und so weiter beinhalten kann, im Bereich der Industrieproduktion, sodass das System beispielsweise Produktionsmaschinen oder -anlagen, Fertigungsmaschinen oder -anlagen, Testvorrichtungen, Überwachungsanlagen, Fördermaschinen oder -anlagen, verfahrenstechnische Anlagen und so weiter beinhalten kann. Weitere nicht beschränkende Anwendungsgebiete liegen im Bereich der Medizintechnik, so dass das System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme und so weiter beinhalten kann. Das System kann auch eines oder mehrere Robotersysteme beinhalten.

Im Allgemeinen beinhaltet ein technisches System sowohl eine oder mehrere Hardwarekomponenten als auch eine oder mehrere Softwarekomponenten. Es ist jedoch auch möglich, dass das technische System lediglich eine oder mehrere Hardwarekomponenten aufweist oder lediglich eine oder mehrere Softwarekomponenten.

In einer Ausgestaltung ist die Mehrzahl der Zuordnungen in einer flüchten oder nicht-flüchtigen Speichereinheit gespeichert, bevorzugt Datenbank oder Cloud. Dementsprechend kann die Speichereinheit als eine Datenbank, eine Cloud oder sonstige flüchtige, nicht-flüchtige Speichereinheit ausgebildet sein. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden. Ein weiterer Vorteil liegt darin, dass auf die Daten effizient zugegriffen werden kann. Bevorzugt wird die Mehrzahl der Zuordnungen als Register (engl. "Repository") in der Speichereinheit gespeichert.

In einer weiteren Ausgestaltung unterscheiden sich die Anwendungen voneinander und/oder sind föderierte Anwendungen. Dementsprechend liegen die Anwendungen bevorzugt als unterschiedliche föderierte Anwendungen vor.

In einer weiteren Ausgestaltung weist jede Tenant-Struktur der Mehrzahl der Tenant-Strukturen Daten im Hinblick auf die zugehörige Anwendung, Daten im Hinblick auf den zugehörigen Tenant und/oder Daten im Hinblick auf mindestens eine zugehörige Rolle oder mindestens eine Berechtigung auf. Daten im Hinblick auf den Tenant umfassen beispielsweise den Tenant Namen.

In einer weiteren Ausgestaltung liegt jede Tenant-Struktur der Mehrzahl der Tenant-Strukturen in Form eines Tupels vor.

Dementsprechend liegt eine Tenant-Struktur mit Daten hinsichtlich der Anwendung, des Tenants und/oder der Rolle in Form eines Tupels vor. Ein beispielhaftes Anwendung/Tenant/Rolle-Tupel ist {App:A, Tenant:B, AppRolle:C}. Eine beispielhafte Zuordnung zwischen zwei Tenant-Strukturen in Bezug auf die Mehrzahl der Anwendungen in Form von zwei Tupeln ist {App:A, Tenant:B, AppRolle:C} à {App:X, Tenant:Y, AppRolle:Z}.

In einer weiteren Ausgestaltung erfolgt das Erstellen des Zugriffs auf die mindestens eine zweite Anwendung mittels eines Tokenaustauschs.

In einer weiteren Ausgestaltung umfasst der Tokenaustausch
- Empfangen eines ersten Tokens, das mit den Zugriffsrechten des mindestens einen ersten Tenants in der ersten Anwendung verknüpft ist,
- Abrufen einer Zuordnung aus der Mehrzahl der Zuordnungen basierend auf Informationen im ersten Token, und
- Generieren von mindestens einem zweiten Token für den Zugriff auf die mindestens eine zweite Anwendung basierend auf der abgerufenen Zuordnung.

Ferner betrifft die Erfindung eine Datenverarbeitungsvorrichtung zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Ansicht von zwei verschiedenen Anwendungen gemäß dem Stand der Technik.
FIG 3 zeigt eine schematische Ansicht der Zuordnungen gemäß einer Ausführungsform der Erfindung.

### 5. Beschreibung der bevorzugten Ausführungsformen

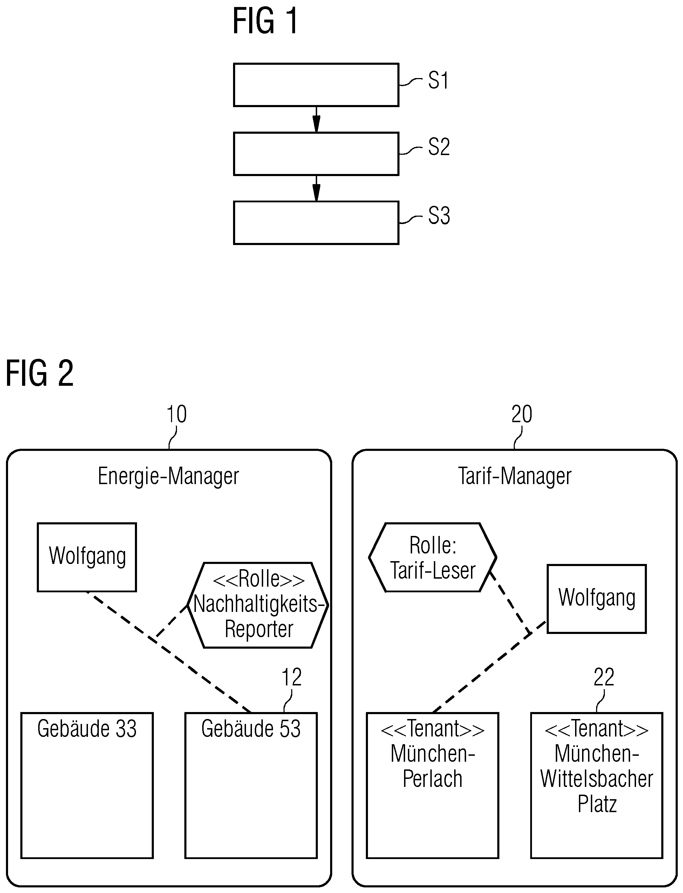

Im Folgenden werden bevorzugte Ausführungsformen der vorliegenden Erfindung in Bezug auf die Figur 1 beschrieben.

Im ersten Verfahrensschritt wird die Mehrzahl der Zuordnungen 30 zwischen der Mehrzahl der Tenant-Strukturen 12, 22 in Bezug auf die Mehrzahl der Anwendungen 10, 20 bereitgestellt S1. Im zweiten Verfahrensschritt wird der Zugriff des mindestens einen Tenants auf die erste Anwendung 10 aus der Mehrzahl der Anwendungen 10, 20 erstellt S2. Die erste Anwendung 10 ist mit der ersten zugehörigen Tenant-Struktur 12 der Mehrzahl der Tenant-Strukturen 12, 22 verknüpft. Im letzten Verfahrensschritt wird der Zugriff des mindestens einen Tenants auf die mindestens eine zweite Anwendung 20 mit der zweiten zugehörige Tenant-Struktur 22 der Mehrzahl der Tenant-Strukturen 12, 22 basierend auf der Mehrzahl der Zuordnungen 30 erstellt S3.

Figur 2 zeigt eine schematische Ansicht von zwei verschiedenen Anwendungen 10, 20 gemäß dem Stand der Technik. Die erste Anwendung 10 wird in Figur 2 als Energie-Manager-Anwendung bezeichnet und die zweiten Anwendung 20 wird in Figur 2 als Tarif-Manager-Anwendung bezeichnet. Die Anwendungen 10 und 20 weisen die Tenant-Strukturen 12, 22 auf, welche sich in Figur 2 voneinander unterscheiden.

Die Zuordnung 30 der Tenant-Strukturen 12, 22 wird gemäß dem Stand der Technik in jeder Anwendung 10, 20 erneut vorgenommen. Dementsprechend ist es erforderlich, dass ein Administrator einer beteiligten Anwendung die Berechtigungen für einen neuen Benutzer auch neu zuordnen muss. Beispielsweise muss der Administrator festlegen welche Rollen oder Rechte der Benutzer erhält. Die Informationen aus der Mehrzahl der Anwendungen 10, 20 müssen hierfür aufwendig zusammengeführt werden.

Die Zusammenführung kann gemäß dem Stand der Technik im Client erfolgen. Der Benutzer authentisiert sich über SSO und kann anschließend Aufrufe an die Anwendungen 10, 20 einleiten. Die eigentliche Berechnung der Daten erfolgt im Client. Die Komplexität der Berechnungen wird somit in den Client verlagert.

Die Zusammenführung kann alternativ über eine führende oder übergeordnete Anwendung erfolgen gemäß dem Stand der Technik. Die führende Anwendung hat eine separate Möglichkeit der Authentisierung bei den aufzurufenden Services (auch "Machine User" genannt), um die notwendigen Daten abzufragen. Auch wenn der Machine User sehr umfangreiche Rechte hat, obliegt es der führenden Anwendung, nur die im Kontext der Benutzeranforderung möglichen oder sichtbaren Daten preiszugeben. Die Berechnungslogik kann in der führenden Anwendung, somit im Backend, erfolgen.

Erstellung der Zuordnungen 30 zwischen der Mehrzahl der Tenant-Strukturen 12, 22 in Bezug auf die Mehrzahl der Anwendungen 10, 20

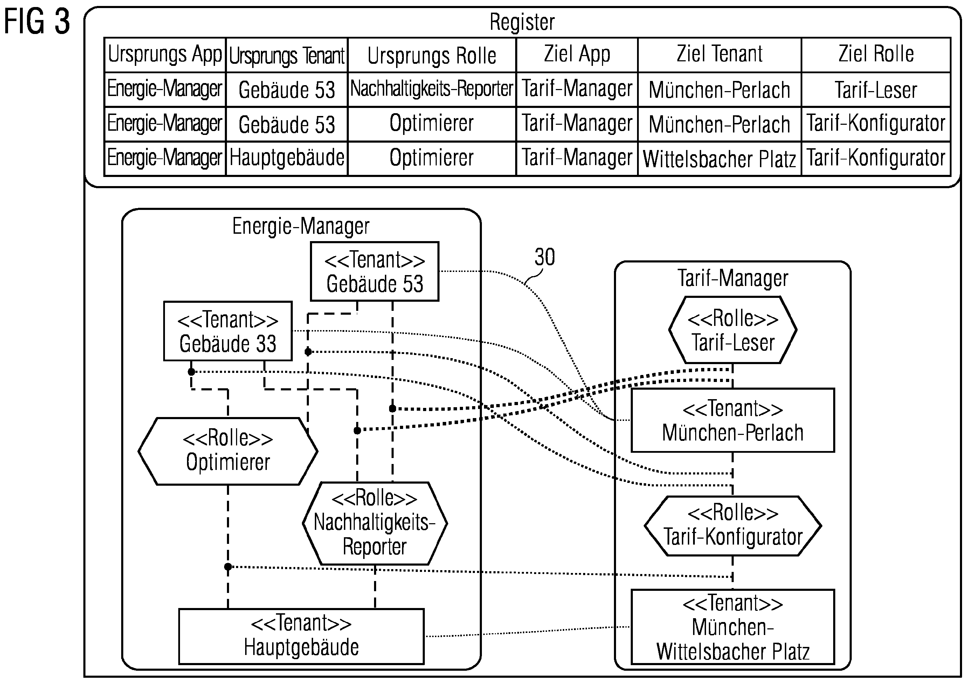

Die Zuordnungen 30 können gemäß einer Ausführungsform der Erfindung als Register und/oder als Tabelle bereitgestellt werden, wie in Figur 3 gezeigt. Die Figur 3 stellt die Zuordnungen 30 oben in Tabellenform und unten graphisch dar.

Es wird eine zentrale und vertrauenswürdige Datenbasis umfassend die Zuordnungen 30 der Tenant-Strukturen 12, 22 als Eingabe für das erfindungsgemäße Verfahren bereitgestellt. Die Tenant-Strukturen können in Form der Tupel vorliegen, welche gemappt werden, beispielsweise wie folgt:
{App:A, Tenant:B, AppRolle:C} à {App:X, Tenant:Y, AppRolle:Z} oder
{ App:Energie-Manager, Tenant:Geb.53, AppRolle:Nachhaltigkeits-Reporter} à
   { App:Tarif-Manager, Tenant:MünchenPerlach, AppRolle:Tarif-Leser} bezugnehmend auf Figur 3.

Gemäß einer Ausführungsform wird ein Register eingeführt, das Zuordnungen zwischen Anwendungen, Tenants sowie Rollen und/oder Berechtigungen über verschiedene Anwendungen hinweg speichert. Dieses Register dient als vertrauenswürdiges Repository für die Definition von Beziehungen zwischen verschiedenen Komponenten in einer Multi-Tenant-Umgebung.

Das Register kann gerichtete Tupel im Format {App:A, Tenant:B, AppRolle:C} → {App:X, Tenant:Y, AppRolle:Z} speichern, wie unidirektional. Ein Integrationsadministrator kann Zuordnungen für jedes relevante Tupel definieren. Zum Beispiel kann eine Zuordnung wie folgt definiert werden:
{App:Energie-Manager, Tenant:Geb.53, AppRolle: Nachhaltigkeits-Reporter} → {App:Tarif-Manager, Tenant:MünchenPerlach, AppRolle:Tarif-Leser}

Diese Struktur ermöglicht eine flexible und granulare Zuordnung zwischen verschiedenen Anwendungen, Tenants und Rollen.

Das Register muss der zweiten Anwendung vertrauen, dass die hinterlegten Zuordnungen valide sind (ähnlich dem SSO, bei dem auch die empfangende Anwendung dem Aussteller des SSO-Tokens vertrauen muss).

Die Anwendungen 10, 20 können für die Erstellung der Zuordnungen 30 ihre jeweiligen Tenant-Strukturen 12, 22 registrieren. Die Tenant-Strukturen 12, 22 können Daten hinsichtlich der Rollen aufweisen. Ein Administrator kann auf dieser Abstraktionsebene eine Verbindung herstellen. Er kann beispielsweise die Verbindung zwischen der ersten Anwendung 10 mit dem Gebäude 53 und der zweiten Anwendung 20 mit dem Standort MÜNCHEN-PERLACH herstellen. Ebenso kann das Gebäude 33 auf den Standort MÜNCHEN-PERLACH gemappt werden, während das Gebäude MAIN BUILDING dem Standort WITTELSBACHER PLATZ zugeordnet werden kann.

Auf Rollenebene kann der Nachhaltigkeits-Reporter für die erste Anwendung Energie-Manager 10 auch der zweiten Anwendung Tarif-Manager 20 zugeordnet werden, während die Optimierer-Rolle der Tarif-Konfigurator-Rolle (z.B. mit Schreibrechten auf die verwendeten Verbrauchspläne des Energieanbieter) zugeordnet werden kann.

Die Zuordnungen 30 können genutzt werden, um die Konfiguration möglicher Rollenzuordnungen zu vereinfachen:
Die Verbindung des Optimierers hinsichtlich des Gebäudes 53 kann in der zweiten Anwendung Tarif-Manager 20 nur an eine Rolle in der Verbindung mit dem Standort MÜNCHEN-PERLACH gebunden werden, da das Gebäude 53 dem Standort MÜNCHEN-PERLACH zugeordnet ist. Die Verbindung des Optimierers hinsichtlich des Gebäudes MAIN BUILDING kann nur an eine Rolle in Verbindung mit dem Standort WITTELSBACHER PLATZ geknüpft werden.

Damit bekommen alle Tenants, die in der ersten Anwendung 10 registriert werden und Berechtigungen am Gebäude 53 in der Rolle Nachhaltigkeits-Reporter bekommen, automatisch Berechtigungen für die zweite Anwendung 20 die notwendigen Tarife abzurufen, ohne nochmals in der zweiten Anwendung 20 gesondert registriert werden zu müssen und Rechte zugeordnet zu bekommen.

Ähnlich dem SSO, bei dem ein Tenant nur einmal eingerichtet wird und sich mit seiner Identität bei vielen Anwendungen anmelden kann, kann ein Tenant durch die Registrierung in einer Anwendung 10 die entsprechenden Rechte in anderen Anwendungen 20 automatisch erhalten.

Gemäß einer Ausführungsform der Erfindung können gerichtete Beziehungen modelliert werden. Der Tenant, der die Rolle Nachhaltigkeits-Reporter hat, hat automatisch Tarif-Lese-Berechtigungen, aber nicht umgekehrt. Alternativ kann eine Äquivalenzklassenbildung eingesetzt werden, die sich durch ungerichtete Beziehungen ergibt.

Der Integrations-Administrator kann für jedes relevante Tupel eine Zuordnung erstellen, wie beispielsweise {App:Energie-Manager, Tenant:Gebäude 53, AppRolle:Nachhaltigkeits-Reporter} à
{ App:Tarif-Manager, Tenant:MünchenPerlach, AppRolle:Tarif-Leser}

Erstellen des Zugriffs 30 auf die zweite Anwendung 20

Der Zugriff auf die mindestens eine zweite Anwendung Tarif-Manager 20 kann gemäß einer Ausführungsform der Erfindung mittels eines Tokenaustauschs erfolgen. Dementsprechend kann der Tokenaustausch beim Übergang von der ersten Anwendung 10 zur zweiten Anwendung 20 durchgeführt werden, wobei das Token für den Energie-Manager (Zugriff mit Rolle Nachhaltigkeits-Reporter auf Gebäude 53) und der Zuordnung (Gebäude 53 à Standort MÜNCHEN-PERLACH und Rolle Nachhaltigkeits-Reporter in Gebäude 53 à Tarif-Leser im Standort MÜNCHEN-PERLACH) in ein Token für den Tarif-Manager mit der entsprechenden Berechtigung Tarif-Leser auf MÜNCHEN-PERLACH getauscht werden kann.

Beispielsweise kann der Tokenaustausch auf Basis von OAuth-Token erfolgen. Ein OAuth-Token ist ein Sicherheitstoken, das im Rahmen des OAuth-Authentifizierungsprotokolls verwendet wird. OAuth ermöglicht es Anwendungen, im Namen eines Benutzers auf Ressourcen zuzugreifen, ohne dass der Benutzer seine Anmeldeinformationen direkt an die Anwendung weitergeben muss.

Der Tokenaustausch kann die Umwandlung eines ursprünglichen Tokens, das mit einer Anwendung verbunden ist, in ein neues Token zur Verwendung mit einer anderen Anwendung beinhalten. Beispielsweise könnte ein Tenant, der sich bei einer Energie-Manager-Anwendung 10 mit bestimmten Berechtigungen authentifiziert hat, auf eine Tarif-Manager-Anwendung 20 zugreifen.

Das ursprüngliche Token kann Informationen über die Rolle und den Tenant in der Energie-Manager-Anwendung 10 enthalten. Dieses Token kann zusammen mit den Mapping-Informationen aus dem Register einem Token-Austauschdienst 20 präsentiert werden.

Der Token-Austauschdienst kann das ursprüngliche Token und die relevanten Zuordnungen analysieren, um die entsprechenden Berechtigungen für die Tarif-Manager-Anwendung 20 zu ermitteln. Basierend auf dieser Analyse kann der Dienst ein neues Token generieren, das die zugeordneten Rollen- und Tenant-Informationen für die Tarif-Manager-Anwendung 20 enthält.

In einigen Fällen kann der Token-Austausch die folgenden Schritte umfassen:
1. Die Energie-Manager Anwendung 10 fordert einen Token-Austausch an und stellt dabei das ursprüngliche OAuth-Token und Informationen zur Zielanwendung bereit.
2. Der Token-Austauschdienst extrahiert relevante Details wie Tenant-Identität und Rolle aus dem ursprünglichen Token.
3. Der Token-Austauschdienst fragt das Register ab, um die entsprechende Rolle und den entsprechenden Tenant in der Tarif-Manager Anwendung 20 zu ermitteln.
4. Ein neues OAuth-Token wird generiert, das die zugeordneten Rollen- und Tenant-Informationen für die Tarif-Manager Anwendung 20 enthält.
5. Das neue Token wird an die anfragende Anwendung zurückgegeben.
6. Die Energie-Manager Anwendung 10 kann dann dieses neue Token verwenden, um autorisierte Anfragen an die Tarif-Manager Anwendung 20 im Namen des Tenants zu stellen.

Dieser Token-Austauschmechanismus kann eine nahtlose Übertragung des Autorisierungskontexts zwischen Anwendungen 10, 20 ermöglichen und gleichzeitig angemessene Zugriffskontrollen basierend auf den konfigurierten Zuordnungen aufrechterhalten. Die Verwendung von Standard-OAuth-Tokens kann die Kompatibilität mit bestehenden Authentifizierungs- und Autorisierungssystemen gewährleisten.

Durch das erfindungsgemäße Verfahren sinken die Konfigurationsaufwände sowie die Engineering-Aufwände signifikant, da die Zuordnung von Tenants zu Rollen innerhalb einer Anwendung ausreicht, um über die Zuordnungen automatisch die Berechtigungen in den anderen Anwendungen zuzuordnen. Besonders wirkt es sich aus, wenn mehrere Anwendungen 10, 20 über diesen Mechanismus verknüpft sind, also eine einzige Zuordnung eines Tenants zu einer Rolle in einer Anwendung, automatisch Berechtigungen in mehreren anderen Anwendungen erstellt.

Beispielsweise, bezugnehmend auf Figur 3, bekommt ein Gebäude-Optimierer durch die Zuordnung in der ersten Anwendung 10 auch die Berechtigungen für die zweite Anwendung 20 und/oder weitere Anwendungen, wie Feuer-Manager, Operations-Manager, Klima-Manager etc.

Im Beispiel gemäß Figur 3 reicht es aus, den Tenant mit dem Namen Wolfgang in der ersten Anwendung 10 die Berechtigungen der Rolle Optimierer am Gebäude 53 zu geben und er hat auch automatisch über die Zuordnung die Rechte an der Rolle Tarif-Konfigurator im Standort MÜNCHEN-PERLACH im Hinblick auf die zweite Anwendung 20.

## Patentansprüche

1. Computer-implementiertes Verfahren zum Verwalten einer Autorisierung von mindestens einem Tenant über eine Mehrzahl von Anwendungen (10, 20) hinweg, aufweisend die Schritte:
a. Bereitstellen von einer Mehrzahl von Zuordnungen (30) zwischen einer Mehrzahl von Tenant-Strukturen (12, 22) in Bezug auf die Mehrzahl der Anwendungen (10, 20) (S1);
b. Erstellen eines Zugriffs des mindestens einen Tenants auf eine erste Anwendung (10) aus der Mehrzahl der Anwendungen (10, 20) (S2); wobei
die erste Anwendung (10) mit einer ersten zugehörigen Tenant-Struktur (12) der Mehrzahl der Tenant-Strukturen (12, 22) verknüpft ist; und
c. Erstellen eines Zugriffs des mindestens einen Tenants auf mindestens eine zweite Anwendung (20) mit einer zweiten zugehörige Tenant-Struktur (22) der Mehrzahl der Tenant-Strukturen (12, 22) basierend auf der Mehrzahl der Zuordnungen (S3).

2. Computer-implementiertes Verfahren nach Anspruch 1, wobei die Mehrzahl der Zuordnungen in einer flüchten oder nicht-flüchtigen Speichereinheit gespeichert ist, bevorzugt Datenbank oder Cloud.

3. Computer-implementiertes Verfahren nach Anspruch 1 oder Anspruch 2, wobei sich die Anwendungen (10, 20) voneinander unterscheiden und/oder föderierte Anwendungen sind.

4. Computer-implementiertes Verfahren nach einem der vorhergehenden Ansprüche, wobei jede Tenant-Struktur (12, 22) der Mehrzahl der Tenant-Strukturen Daten im Hinblick auf die zugehörige Anwendung, Daten im Hinblick auf den zugehörigen Tenant und/oder Daten im Hinblick auf mindestens eine zugehörige Rolle oder mindestens eine Berechtigung aufweist.

5. Computer-implementiertes Verfahren nach einem der vorhergehenden Ansprüche, wobei jede Tenant-Struktur (12, 22) der Mehrzahl der Tenant-Strukturen in Form eines Tupels vorliegt.

6. Computer-implementiertes Verfahren nach einem der vorhergehenden Ansprüche, wobei das Erstellen des Zugriffs auf die mindestens eine zweite Anwendung (22) mittels eines Tokenaustauschs erfolgt.

7. Computer-implementiertes Verfahren nach Anspruch 7, wobei der Tokenaustausch umfasst
- Empfangen eines ersten Tokens, das mit den Zugriffsrechten des mindestens einen Tenants in der ersten Anwendung (10) verknüpft ist,
- Abrufen einer Zuordnung aus der Mehrzahl der Zuordnungen basierend auf Informationen im ersten Token, und
- Generieren von mindestens einem zweiten Token für den Zugriff auf die mindestens eine zweite Anwendung (20) basierend auf der abgerufenen Zuordnung.

8. Datenverarbeitungsvorrichtung zum Durchführen des Verfahrens nach einem der vorhergehenden Ansprüche.

9. Computerprogrammprodukt mit einem Computerprogramm, das Mittel zur Durchführung des Verfahrens nach einem der Ansprüche 1 bis 7 aufweist, wenn das Computerprogramm auf einer programmgesteuerten Einrichtung zur Ausführung gebracht wird.
